(19) Europäisches Patentamt
European Patent Office
Office européen des brevets

(11) Publication number: **0 027 466 B1**

# (12) EUROPEAN PATENT SPECIFICATION

(45) Date of publication of patent specification: **23.02.83**

(51) Int. Cl.³: **B 01 J 19/02**

(21) Application number: **80901046.5**

(22) Date of filing: **08.04.80**

(86) International application number:
**PCT/US80/00393**

(87) International publication number:
**WO 80/02388 13.11.80 Gazette 80/26**

## (54) COATING POLYMERIZATION REACTORS WITH THE REACTION PRODUCTS OF THIODIPHENOLS AND A BLEACH.

(30) Priority: **30.04.79 US 34106**

(43) Date of publication of application:
**29.04.81 Bulletin 81/17**

(45) Publication of the grant of the patent:
**23.02.83 Bulletin 83/8**

(84) Designated Contracting States:
**DE FR GB NL SE**

(56) References cited:
**GB - A - 1 536 160**
**US - A - 4 024 330**
**US - A - 4 068 052**
**US - A - 4 080 173**
**US - A - 4 081 248**

**CHEMICAL ABSTRACTS, vol. 86, no. 14, 14th April 1977, page 54, no. 90928m Columbus, Ohio, U.S.A.**

(73) Proprietor: **The B.F. GOODRICH Company**
**Dept. 0015 WHB-6 500 South Main Street**
**Akron, Ohio 44318 (US)**

(72) Inventor: **COHEN, Louis**
**32106 Lake Road**
**Avon Lake, OH 44012 (US)**

(74) Representative: **Schönwald, Karl, Dr.-Ing. et al,**
**Deichmannhaus**
**D-5000 Köln 1 (DE)**

**EP 0 027 466 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

# Coating polymerization reactors with the reaction products of thiodiphenols and a bleach

## Background of the Invention

Various type chemical processes are commonly carried out in large, stirred vessels which are frequently provided with auxiliary equipment, such as baffles, agitator equipment, heat transfer coils which enable heat to be supplied or extracted from the contents of the vessels, and the like. In many cases, however, such processes eventually produce undesirable deposits on the surfaces of the equipment with which the reaction mixtures come into contact. Such deposits interfere with the efficient transfer of heat to and from the interior of the vessels. Further, these deposits have a tendency to deteriorate and to partially fragment resulting in contamination of the reaction mixture and the products produced therefrom. This problem is particularly prevalent in polymerization type reactions, since the deposits, or buildup, of solid polymer on reactor surfaces not only interferes with heat transfer, but decreases productivity and adversely affects polymer quality.

The polymer buildup problem is particularly troublesome in the commercial production of polymers and copolymers of vinyl and vinylidene halides, when polymerized alone or with other vinylidene monomers having a terminal $CH_2=C<$ group, or with polymerizable polyolefinic monomers. For example, when polymerizing vinyl chloride and other comonomers when used, the same are maintained in the form of discrete droplets in an aqueous suspension system by the use of suspending agents and agitation. When the reaction is complete, the resultant polymer, or PVC, is washed and dried. However, these suspension systems are often unstable and during the polymerization reaction vinyl chloride polymer builds up on the inner surfaces of the reactor. Obviously, this polymer buildup must be removed since it results in further formation of polymer buildup which in turn results in a crust formation that adversely affects heat transfer and contaminates the polymer being produced.

Various methods have heretofore been proposed to reduce the amount and nature of polymer buildup on polymerization reactor surfaces, such as solvent cleaning, various hydraulic and mechanical reactor cleaners and the like. While the various methods and apparatus have done an acceptable job, none has proven to be the ultimate in polymer buildup removal. Various coating materials have been proposed for coating the internal surfaces of the reactor which materials are resistant to polymer buildup. For example, in U.S. Patent No. 4,080,173 there is shown and described the use of self-condensed polyhydric phenols and polyhydric naphthols as coatings to prevent polymer buildup. While these coating materials give good to excellent results, there is still a need to improve on these materials, particularly in reducing the concentration of the material in the coating solutions and also in reducing the color in the coating solution.

## Summary of the Invention

It has been found that when the interior surfaces of a polymerization reactor are coated with an aqueous coating solution containing the reaction product of a thiodiphenol, or a derivative thereof, with a bleaching agent or material, such as, for example, sodium hypochlorite (NaOCL), polymer buildup on said interior surfaces of the reactor is substantially reduced or eliminated. Due to the nature of the coating solution, and the coating material contained therein, it can be applied to the inner surfaces of the reactor without opening the same thus providing a closed polymerization system. In polymerizing the monomers in such a coated polymerization vessel or reactor, the same is done in an aqueous polymerization medium which is kept in contact with said coated surfaces throughout the polymerization reaction.

## Detailed Description

In accordance with the present invention, a film or coating of a coating material, made by reacting a thiodiphenol, or a derivative thereof, as hereinbefore defined, with a bleaching material or agent, is applied to the inner surface of a polymerization reactor or vessel by merely contacting said surfaces with an aqueous solution of said coating material. All exposed surfaces in the interior of the reactor, such as the baffles, agitator or mixing mechanism, condensers, when the same are used, are likewise coated in the same manner. After the coating solution has been applied to the inner surface of the reactor, the polymerization medium can be introduced to the reactor and the reaction started without the necessity of drying said surfaces beforehand. However, in many cases it is preferred, when after the application of the coating solution to the inner surfaces, that the surfaces are rinsed with water, such as by spraying, filling the reactor and draining, and the like, thereby, surprisingly, leaving on said surfaces a tightly adhered coating or film of the coating material which is not affected by the polymerization medium even though said medium is vigorously agitated during the polymerization reaction.

Various bleaching materials or agents may be reacted with the thiodiphenols and derivatives thereof, such as chlorine, hypochlorites and chloramines, and chlorite and chlorine dioxide. The preferred bleaching materials or agents for use in the present invention are the hypochlorites, and in particular, sodium hypochlorite (NaOCl). The reaction is fairly simple and involves forming an alkali metal salt of the thiodiphenol, or derivative thereof, such as with sodium hydroxide, and then reacting said salt in an aqueous medium with the bleaching material while using good agitation.

The useful thiodiphenols and derivatives thereof, for making the coating solutions for the practice of the present invention, are those compounds represented by the following generic formula:

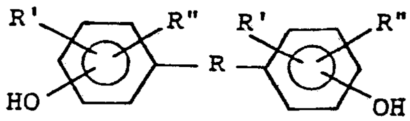

wherein

R is —S—; or $-\overset{\text{O}}{\overset{\|}{\text{S}}}-$; R′ is —H; —OH;

or an alkyl group containing from 1 to 4 carbon atoms; and R″ is —H or —Cl. As examples of compounds having said generic formula, there may be named 2,2′-thiodiphenol, 3,3′-thiodiphenol, 4,4′-thiodiphenol, 2,2′-dimethyl-4,4′-thiodiphenol, 3,3′-dimethyl-4,4′-thiodiphenol.

In order to form the reacted coating materials of the present invention, the thiodiphenol, or derivative, is first formed into the alkali metal salt. This is accomplished by dissolving, with stirring, the thiodiphenol, or derivative, in an aqueous alkali metal or ammonium hydroxide solution at a temperature in the range of 5°C to 50°C. This solution will contain from 2.0% to 10.0% by weight as thiodiphenol and will have a pH in the range of 10 to 13 and the intermediate product need not be recovered. Then a separate aqueous solution containing 2% to 10% by weight of a bleaching material or agent, for example, NaOCl, is made up at a temperature in the range of 5°C to 50°C. Then the latter solution is slowly added to the former solution with good agitation at a temperature in the range of 5°C to 50°C. The final molar ratio of bleaching material or agent to thiodiphenol will be in the range of 0.1 to 2.0 and preferably in the range of 0.4 to 0.8. The resultant solution containing the reacted product is the master coating solution and will have a pH in the range of 10 to 13. This master coating solution is then further diluted with water to give a coating solution for application to the reactor surfaces having a total solids content, based on the weight of the thiodiphenol, or derivative thereof, reaction product in the range of 0.1% to 5% by weight. Preferably, the final coating solution will contain from 0.3% to 1% by weight of the coating material as dry product. The pH of the final coating solution can be adjusted by means of an acid, such as hydrochloric acid, so as to fall within the range of 9.7 to 13. When adjusting the pH with HCl, for example, a precipitate forms locally but redissolves rapidly. It is to be noted that the pH of the coating solution is affected by the kind and number of substituent groups attached to the aromatic nuclei of the coating material and the cation used to form the salt of the thiodiphenol or derivative thereof, such as Na, K, Li, $NH_4$.

In order to prevent polymer buildup in a polymerization reactor, it is essential that the inner surfaces there are water-wettable. An ordinary solid surface, such as stainless steel, is non water-wettable due to the normal contamination of said surfaces with organic materials through contact with the atmosphere. The surfaces can be cleaned, such as with chromic acid or an abrasive cleanser, for example, and it will become water-wettable. However, such cleaning alone does not solve the problem since the surfaces will not remain clean for a sufficient length of time, that is, for more than the duration of a single polymerization reaction. This necessitates recleaning the surface after each polymerization cycle. Therefore, applying a coating to the surfaces which will be water-wettable and resist polymer buildup thereon and remain on said surfaces throughout multiple reaction cycles is most desirable.

When a metal or solid surface is non-wettable, a liquid thereon, such as water, will form droplets and not flow out into a smooth film. The angle formed between the tangent of the side of the droplet and the metal or glass surface is called the "contact angle" and is referred to as "theta" ($\theta$). A further measurement of the wettability of a solid surface is the critical surface tension for wetting a solid surface and is expressed as "$\gamma_c$". The $\gamma_c$ is measured in dynes per centimeter. Using water as the standard, in order for a solid surface to be wettable, $\theta$ must equal zero or be very close to it, and $\gamma_c$ must be 72 dynes/cm. or greater.

More importantly, the material being applied to the surface should not only form a wettable surface, but also form a layer or film thereon which is not readily removable. This film adheres to the solid or metal surface by adsorption and in many cases, the film is a monolayer of the coating material applied which is of the order of a molecule in thickness. These films of such thickness are invisible to the naked eye thus eliminating any color problem, such as is the problem with many coatings heretofore used for the same purpose. Of course, films of greater thickness can result when using higher solids content coating solutions, in accordance with the present invention, which films or coatings are visible to the naked eye. The film or layer formed by the coating solution is not removable by washing with water. That is to say, the coating or film is resistant to removal from the surfaces when a turbulent aqueous reaction medium is in contact therewith, caused by the agitation of the polymerization mixture in the reactor.

The coating solution is usually applied to the

inner reactor surfaces by spraying it on. However, it is also possible to apply the coating solution by flooding the reactor and then draining, or painting or brushing on, but spraying is the most practical and economical method of application. After spraying the coating solution on the inner surfaces and draining the reactor, the polymerization reaction can be started immediately without further treatment of said surfaces. However, it has been found that excellent results are obtained when after applying the coating solution to the inner surfaces of the reactor, the coated surfaces are sprayed with water and the reactor drained prior to charging the reactor with the polymerization mixture or recipe. It should also be pointed out that the coatings defined herein work equally well on glass or metal surfaces, such as stainless steel, and the like.

One important aspect of the present invention is that multiple polymerizations may be run without opening the reactor between charages since, with the spray nozzle or nozzles mounted at strategic points on the reactor, it is possible to reach all inner surfaces thereof while the reactor is closed. Although multiple charges may be run in a coated reactor without recoating the surfaces, it has been found to be expeditious, and preferred, to recoat the internal surfaces of the reactor periodically after several charges have been run therein, or after each charge, to insure uniform and efficient production. When it is decided to recoat the reactor, the reactor is drained and the inner surfaces of the reactor are flushed with water. The coating solution is applied to the surfaces, preferably by spraying, and the reactor is drained of the excess coating solution in such a way that the same can be sent to a recovery system, if desired. Then, optionally, the surfaces having the coating thereon are sprayed with water and the effluent is discarded, or recovered if desired. Thereafter, the reactor is charged with the polymerization medium and ingredients in the usual manner and the reaction commenced immediately with no particular modification or processing techniques being required due to the presence of the coating. It is understood, of course, that one can recoat the reactor as often as desired without opening the same, even after every charge is polymerized. Further, utilization of the internally coated reaction vessel of the present invention does not adversely affect the heat stability or other physical and chemical properties of the polymers produced therein.

For the purpose of simplicity of description, the present invention is described in terms of the use of NaOCl as the bleaching material or agent reacted with thiodiphenols and derivatives thereof and the use of such reaction products as a coating material in conjunction with the polymerization of vinyl chloride. It is to be understood, of course, that this is merely intended in an illustrative and not a limitative sense.

While the present invention is specifically illustrated with regard to the suspension polymerization of vinyl chloride, it is to be understood that the process and apparatus may likewise be applied in the dispersion, emulsion, or suspension polymerization of any polymerizable ethylenically unsaturated monomer or monomers where undesirable polymer buildup occurs. Examples of such monomers are other vinyl halides and vinylidene halides, such as vinyl bromide, vinylidene chloride, etc.; vinylidene monomers having at least one terminal $CH_2{=}C{<}$ grouping, such as esters of acrylic acid, for example methyl acrylate, ethyl acrylate, butyl acrylate, octyl acrylate, cyanoethyl acrylate; vinyl acetate; acrylonitrile; esters of methacrylic acid, such as methyl methacrylate, butyl methacrylate; styrene and styrene derivatives including $\alpha$-methyl styrene, vinyl toluene, chlorostyrene; vinyl naphthalene; diolefins including butadiene, isoprene, chloroprene; and mixtures of any of these types of monomers and other vinylidene monomers copolymerizable therewith; and other vinylidene monomers of the types known to those skilled in the art.

The present invention, however, is particularly applicable to the suspension polymerization of vinyl chloride, either alone or in a mixture with one or more other vinylidene monomers having at least one terminal $CH_2{=}C{<}$ grouping copolymerizable therewith in amounts as great as about 80% or more by weight, based on the weight of the monomer mixture, since polymer buildup in the reaction vessel is a bad problem here.

The polymerization process is usually conducted at a temperature in the range of 0°C to 100°C depending upon the particular monomer or monomers being polymerized. However, it is preferred to employ temperatures in the range of 40°C to 70°C since, at these temperatures, polymers having the most beneficial properties are produced. The time of the polymerization reaction will vary from 2 to 15 hours.

The polymerization process may be carried out at autogenous pressures although superatmospheric pressures of up to 10 bar or more may be employed with some advantage with the more volatile monomers. Superatmospheric pressures may also be employed with those monomers having the requisite volatilities at reaction temperatures permitting reflux cooling of the reaction mixture.

Further, the polymerization process may be carried out utilizing a full reactor technique. That is, the reaction vessel is completely filled with the polymerizable medium and kept that way throughout the reaction by constant addition thereto of water or additional make-up liquid containing the monomer or monomers in the same proportions as at start-up. Upon the addition of a certain predetermined amount of liquid, the polymerization reaction is terminated,

usually by the addition thereto of a short-stopping agent. The necessity for the addition of liquid is due to the shrinkage in volume of the reaction medium produced by the conversion of the monomer or monomers to the polymeric state.

In order to rate the various coatings, there has been devised a rating scale with respect to "paper" and "sandy" buildup. An uncoated reactor, where normal amounts of both types of buildup occur, is given a rating of 1.5. Any rating below 1.0 is good or a definite improvement. In other words, 0.0 rating is perfect, and so on.

To further illustrate the present invention, the following specific examples are given. In the examples, all parts and percents are by weight unless otherwise indicated.

, Example I

In this example, the following were mixed together at a temperature of 23°C with stirring to form a clear solution having a pH of 11.95.

| | | |
|---|---|---|
| (A.) | 4,4′-thiodiphenol (TDP) | 10 gms. |
| | NaOH | 10 gms. |
| | $H_2O$ (demineralized) | 880 gms. |

One hundred grams of Solution (B.), which was an aqueous solution of 5.25% NaOCl at a pH of 10.7, was added to (A.) slowly with stirring at room temperature. The resultant solution was amber colored and had a pH of 12. The pH of the resultant reaction product coating solution was adjusted to 10.45 with hydrochloric acid. The solids content of the coating solution was 1% by weight as TDP. Thereafter, the inner surfaces of a three liter polymerization reactor equipped with a stirrer, which had been previously cleaned with an abrasive cleanser, were coated with said coating solution by spraying on the surfaces and then rinsing with water. The coating had a $\gamma_c$ greater than 72 dynes/cm. After coating the following recipe was charged to the coated reactor:

| | |
|---|---|
| Vinyl chloride | 1000 gms. |
| Water (demineralized) | 2055 gms. |
| 88% hydrolyzed polyvinyl acetate | 0.5 gms. |
| di-secondary butyl peroxy dicarbonate | 0.5 cc. |

A full reactor technique was used in the polymerization, sufficient water being added to keep the reactor full throughout the reaction cycle. The temperature of the reaction was maintained at 57°C and the reaction medium was stirred. Water was added to the reactor as the reaction mixture shrank because of the formation of polyvinyl chloride (PVC). Upon the addition of 400 grams of water, the reaction was discontinued. After removal of the contents of the reactor, in usual fashion, the internal surfaces were rinsed with water, then recoated and rinsed with water and a second charge made and polymerized in the same manner as above. The same procedure was again repeated in making a third charge. The reactor surfaces were evaluated after each charge. The results of the buildup ratings were as follows:

| | Buildup | |
|---|---|---|
| Charge No. | Paper | Sandy |
| 1 | 0.1 | 0 |
| 2 | 0.4 | 0 |
| 3 | 0.2 | 0.1 |

These results show the superiority of the coated reactor of the present invention over the control, or uncoated reactor which, as stated above, has a buildup rating of 1.5 for both paper and sandy.

The present invention has many advantages, principal among which is the ability to use very dilute coating solutions in polymerization reactors and still substantially reduce polymer buildup. By the use of dilute coating solutions, the adverse color problem is eliminated and the economics are greatly improved. Another advantageous feature of the present invention is the ease with which the coating material is prepared, that is, by a novel nearly instantaneous reaction in water at, or near, room temperature. Further, the present invention enables one to operate a closed reactor system thus eliminating the escape of any unreacted monomer into the surrounding atmosphere of the plant, which could be injurious to health. Numerous other advantages of the present invention will be apparent to those skilled in the art.

## Claims

1. A process for substantially eliminating the buildup of polymers on the internal surfaces of a polymerization reaction vessel which comprises applying to said surfaces an aqueous coating solution containing the reaction product of a thiodiphenol and a bleaching agent, said thiodiphenol having the general structure

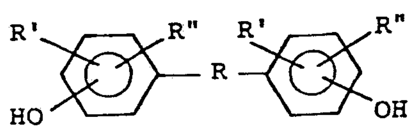

wherein R is selected from a group consisting of

—S—, and 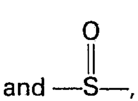 ,

R′ is selected from the group consisting of —H, —OH, and an alkyl group containing from 1 to 4 carbon atoms, and R″ is —H or —Cl, and conducting the polymerization of monomer(s) while in contact with the coated internal surfaces of said vessel.

2. A process as defined in Claim 1 wherein the monomer is vinyl chloride.

3. A process as defined in Claim 1 wherein the thiodiphenol is 4,4′-thiodiphenol.

4. A process as defined in Claim 1 wherein the thiodiphenol is 2,2′-thiodiphenol.

5. A process as defined in Claim 1 wherein the thiodiphenol is 3,3′-thiodiphenol.

6. A process as defined in Claim 1 wherein the thiodiphenol is 2,2′-dimethyl-4,4′-thiodiphenol.

7. A process as defined in Claim 1 wherein the thiodiphenol is 3,3′-dimethyl-4,4′-thiodiphenol.

8. A process as defined in Claim 1 wherein the bleaching agent is sodium hypochlorite.

9. A process as defined in Claim 1 wherein the coating solution has a pH in the range of 9.7 to 12.

10. a process as defined in Claim 1 wherein the polymerization of the monomer(s) is conducted at a temperature in the range of 10°C to 80°C.

11. A process as defined in Claim 1 wherein the monomers are vinyl chloride and vinyl acetate.

12. A process as defined in Claim 2 wherein the thiodiphenol is 4,4′-thiodiphenol.

13. A process as defined in Claim 12 wherein the bleaching agent is sodium hypochlorite.

14. A process as defined in Claim13 wherein the coating solution has a pH in the range of 9.7 to 13.

15. A process as defined in Claim 14 wherein the polymerization is conducted at a temperature in the range of 10°C to 80°C.

16. A polymerization reaction vessel having on all the internal surfaces thereof a coating comprised of the reaction product of a thiodiphenol and a bleaching agent, said thiodiphenol having the general structure

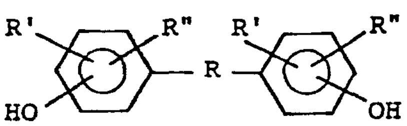

wherein R is selected from the group consisting of

—S—, and 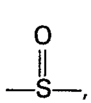,

R′ is selected from the group consisting of —H, —OH, and an alkyl group containing from 1 to 4 carbon atoms, and R″ is —H, or —Cl.

17. A polymerization reaction vessel as defined in Claim 16 wherein the coating is comprised of the reaction product of 4,4′-thiodiphenol and a bleaching agent.

18. A polymerization reaction vessel as defined in Claim 16 wherein the coating is comprised of the reaction product of 4,4′-thiodiphenol and sodium hypochlorite.

19. A polymerization reaction vessel as defined in Claim 16 wherein the coated surfaces are characterized by having a critical surface tension of at least 72 dynes/centimeter and a contact angle with water of about zero.

**Revendications**

1. Un procédé pour supprimer practiquement l'accumulation de polymères sur les surfaces internes d'un réacteur de polymérisation, qui consiste à appliquer sur lesdites surfaces une solution de revêtement aqueuse contenant le produit de réaction d'un thiodiphénol et d'un agent de blanchiment, ledit thiodiphénol ayant la structure générale

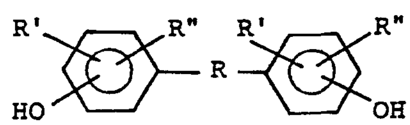

dans laquelle R est choisi dans le groupe consistant en

—S— et 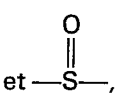,

R′ est choisi dans le groupe consistant en —H, —OH et en un groupe alkyle renfermant 1 à 4 atomes de carbone et R″ est —H ou —Cl et à conduire la polymérisation du ou des monomères pendant qu'ils se trouvent en contact avec les surfaces internes revêtues dudit réacteur.

2. Procédé tel que défini dans le revendication 1, caractérisé en ce que le monomère est le chlorure de vinyle.

3. Procédé tel que défini dans la revendication 1, caractérisé en ce que le thiodiphénol est le 4,4′-thiodiphénol.

4. Procédé tel que défini dans la revendication 1, caractérisé en ce que le thiodiphénol est le 2,2′-thiodiphénol.

5. Procédé tel que défini dans la revendication 1, caractérisé en ce que le thiodiphénol est le 3,3′-thiodiphénol.

6. Procédé tel que défini dans la revendication 1, caractérisé en ce que le thiodiphénol est le 2,2′-diméthyl-4,4′-thiodiphénol.

7. Procédé tel que défini dans la revendication 1, caractérisé en ce que le thiodiphénol est le 3,3′-diméthyl-4,4′-thiodiphénol.

8. Procédé tel que défini dans la revendication 1, caractérisé en ce que l'agent de blanchiment est l'hypochlorite de sodium.

9. Procédé tel que défini dans la revendication 1, caractérisé en ce que la solution de

revêtement possède un pH compris entre 9,7 et 12.

10. Procédé tel que défini dans la revendication 1, caractérisé en ce que la polymérisation du ou des monomères est conduite à une température se situant entre 10°C et 80°C.

11. Procédé tel que défini dans la revendication 1, caractérisé en ce que les monomères sont le chlorure de vinyle et l'acétate de vinyle.

12. Procédé tel que défini dans la revendication 2, caractérisé en ce que le thiodiphénol est le 4,4'-thiodiphénol.

13. Procédé tel que défini dans la revendication 12, caractérisé en ce que l'agent de blanchiment est l'hypochlorite de sodium.

14. Procédé tel que défini dans la revendication 13, caractérisé en ce que la solution de revêtement possède un pH compris entre 9,7 et 13.

15. Procédé tel que défini dans la revendication 14, caractérisé en ce que la polymérisation est conduite à une température se situant entre 10°C et 80°C.

16. Un réacteur de polymérisation comportant sur toutes ses surfaces internes un revêtement constitué par le produit de réaction d'un thiodiphénol et d'un agent de blanchiment, ledit thiodiphénol possédant la structure générale:

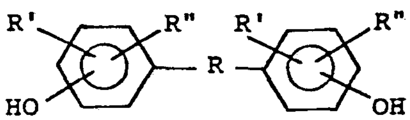

dans laquelle R est choisi dans le groupe consistant en

—S— et 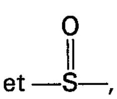,

R' est choisi dans le groupe consistant en —H, —OH et en un groupe alkyle contenant 1 à 4 atomes de carbone et R'' est —H ou —Cl.

17. Un réacteur de polymérisation tel que défini dans la revendication 16, caractérisé en ce que le revêtement est constitué par le produit de réaction de 4,4'-thiodiphénol et d'un agent de blanchiment.

18. Un réacteur de polymérisation tel que défini dans la revendication 16, caractérisé en ce que le revêtement est constitué par le produit de réaction de 4,4'-thiodiphénol et l'hypochlorite de sodium.

19. Un réacteur de polymérisaton tel que défini dans la revendication 16, dans lequel les surfaces revêtues se caractérisent par le fait qu'elles possèdent une tension superficielle critique d'au moins 72 dynes/centimètre et un angle contact avec l'eau d'environ zéro.

## Patentansprüche

1. Verfahren zur weitestgehenden Unterdrückung der Krustenbildung von Polymeren an den inneren Oberflächen eines Polymerisations-Reaktionsgefäßes, dadurch gekennzeichnet, daß eine das Reaktionsprodukt aus einem Thiodiphenol und einem Bleichmittel enthaltende wäßrige Beschichtungslösung auf die betreffenden Oberflächen aufgebracht wird, wobei das Thiodiphenol die allgemeine Struktur

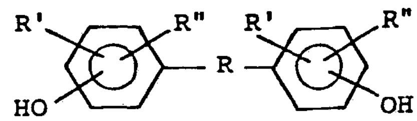

besitzt, in der R ausgewählt ist aus der aus

—S— und 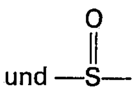 bestehenden Gruppe,

R' ausgewählt ist aus der aus —H, —OH und 1 bis 4 Kohlenstoff-Atome enthaltenden Alkyl-Gruppen bestehenden Gruppe und R'' —H oder Cl ist, und daß die Polymerisation des (der) Monomeren durchgeführt wird, während dieses (diese) sich in konstanter Berührung mit den beschichteten inneren Oberflächen des Gefäßes befindet (befinden).

2. Verfahren nach Anspruch 1, dadurch gekennzeichnet, daß das Monomere Vinylchlorid ist.

3. Verfahren nach Anspruch 1, dadurch gekennzeichnet, daß das Thiodiphenol 4,4'-Thiodiphenol ist.

4. Verfahren nach Anspruch 1, dadurch gekennzeichnet, daß das Thiodiphenol 2,2'-Thiodiphenol ist.

5. Verfahren nach Anspruch 1, dadurch gekennzeichnet, daß das Thiodiphenol; 3,3'-Thiodiphenol ist.

6. Verfahren nach Anspruch 1, dadurch gekennzeichnet, daß das Thiodiphenol 2,2'-Dimethyl-4,4'-thiodiphenol ist.

7. Verfahren nach Anspruch 1, dadurch gekennzeichnet, daß das Thiodiphenol 3,3'-Dimethyl-4,4'-thiodiphenol ist.

8. Verfahren nach Anspruch 1, dadurch gekennzeichnet, daß das Bleichmittel Natriumhypochlorit ist.

9. Verfahren nach Anspruch 1, dadurch gekennzeichnet, daß die Beschichtungslösung einen pH im Bereich von 9,7 bis 12 besitzt.

10. Verfahren nach Anspruch 1, dadurch gekennzeichnet, daß die Polymerisation des (der) Monomeren bei einer Temperatur im Bereich von 10°C bis 80°C durchgeführt wird.

11. Verfahren nach Anspruch 1, dadurch gekennzeichnet, daß die Monomeren Vinylchlorid und Vinylacetat sind.

12. Verfahren nach Anspruch 2, dadurch gekennzeichnet, daß das Thiodiphenol 4,4'-Thiodiphenol ist.

13. Verfahren nach Anspruch 12, dadurch gekennzeichnet, daß das Bleichmittel Natriumhypochlorit ist.

14. Verfahren nach Anspruch 13, dadurch gekennzeichnet, daß die Beschichtungslösung einen pH im Bereich von 9,7 bis 12 besitzt.

15. Verfahren nach Anspruch 14, dadurch gekennzeichnet, daß die Polymerisation bei einer Temperatur im Bereich von 10°C bis 80°C durchgeführt wird.

16. Polymerisations-Reaktionsgefäß, dessen innere Oberflächen vollständig mit einem das Reaktionsprodukt aus einem Thiodiphenol und einem Bleichmittel enthaltenden Überzug beschichtet sind, wobei das Thiodiphenol die allgemeine Struktur.

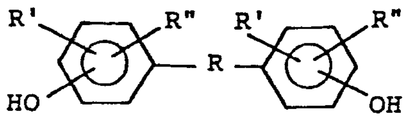

besitzt, in der R ausgewählt ist aus der aus

—S— und 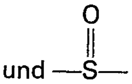 bestehenden Gruppe,

R′ ausgewählt ist aus der aus —H, —OH und 1 bis 4 Kohlenstoff-Atome enthaltenden Alkyl-Gruppen bestehenden Gruppe und R″ —H oder Cl ist.

17. Polymerisations-Reaktionsgefäß nach Anspruch 16, dadurch gekennzeichnet, daß der Überzug das Reaktionsprodukt aus 4,4′-Thiodiphenol und einem Bleichmittel enthält.

18. Polymerisations-Reaktionsgefäß nach Anspruch 16, dadurch gekennzeichnet, daß der Überzug das Reaktionsprodukt aus 4,4′-Thiodiphenol und Natriumhypochlorit enthält.

19. Polymerisations-Reaktionsgefäß nach Anspruch 16, dadurch gekennzeichnet, daß die beschichteten Oberflächen eine kritische Oberflächenspannung von mindestens 72 mN/m (dyn/cm) und einen Kontaktwinkel mit Wasser von etwa Null besitzen.